Europäisches Patentamt

European Patent Office

Office européen des brevets

(19)

(11) EP 0 702 467 B1

(12) FASCICULE DE BREVET EUROPEEN

(45) Date de publication et mention
de la délivrance du brevet:
**24.04.2002 Bulletin 2002/17**

(51) Int Cl.⁷: **H04L 7/02**

(21) Numéro de dépôt: **95202392.7**

(22) Date de dépôt: **05.09.1995**

(54) **Système de transmission numérique synchronisable sur des séquences d'initialisation**

Mittels Initialisierungsfolge synchronisierbares digitales Übertragungssystem

Digital transmission system synchronizable on initialization sequences

(84) Etats contractants désignés:
**DE FR GB**

(30) Priorité: **13.09.1994 FR 9410907**

(43) Date de publication de la demande:
**20.03.1996 Bulletin 1996/12**

(73) Titulaire: **Koninklijke Philips Electronics N.V.**
**5621 BA Eindhoven (NL)**

(72) Inventeurs:
• **Ballarin, Bruno**
**F-75008 Paris (FR)**
• **Chouly, Antoine**
**F-75008 Paris (FR)**
• **Giorgi, Sabine**
**F-75008 Paris (FR)**

(74) Mandataire: **Chaffraix, Jean et al**
**Société Civile S.P.I.D.**
**156, Boulevard Haussmann**
**75008 Paris (FR)**

(56) Documents cités:
**WO-A-80/01348**

• **CCITT, THE INTERNATIONAL TELEGRAPH AND TELEPHONE CONSULTATIVE COMMITEE, RECOMMENDATION V.32 BIS, GENEVA 1991,**
• **PROCEEDINGS ICASSP 90, INTERNATIONAL CONFERENCE ON ACOUSTICS, SPEECH, AND SIGNAL PROCESSING, vol. 1, 6 Avril 1990 pages 1679-1682, A.M. GOTTLIEB ET AL 'THE DSP IMPLEMENTATION OF A NEW TIMING RECOVERY TECHNIQUE FOR HIGH SPEED DIGITAL DATA TRANSMISSION'**

EP 0 702 467 B1

**Description**

L'invention concerne un système de transmission numérique comprenant au moins un émetteur émettant un signal comportant une séquence d'initialisation et au moins un récepteur qui se synchronise sur l'émetteur à l'aide de moyens de corrélation qui effectuent une reconnaissance de la séquence d'initialisation.

L'invention concerne également la méthode correspondante.

C'est un problème courant de synchroniser un récepteur de signal sur un émetteur de signal placés chacun aux extrémités d'un canal de transmission. La synchronisation peut être obtenue en détectant une séquence émise à l'initialisation de la transmission.

Le document "Frame Synchronization Techniques" R.A. SCHOLTZ, IEEE Transactions on Communications Vol. COM-28, n° 8, 1980, pages 1204-1213 décrit une technique de synchronisation de trame basée sur une corrélation entre une séquence d'initialisation et une séquence de référence. Lorsque les deux séquences sont identiques, la corrélation est maximale et un signal de corrélation est émis, servant à établir la synchronisation. Mais une telle technique est vite limitée lorsque le canal de transmission génère des distorsions.

Cette situation se présente dans des systèmes de transmission numérique, par exemple en téléphonie, pour lesquels à l'une des extrémités d'un canal se trouve un émetteur/récepteur qui opère en émetteur tandis qu'à l'autre extrémité se trouve un autre émetteur/récepteur qui opère en récepteur, et inversement. Dans un tel mode de fonctionnement bidirectionnel, il est nécessaire de synchroniser les deux émetteurs/récepteurs l'un sur l'autre au cours d'une période d'initialisation. Pour effectuer cette synchronisation, on utilise des signaux de synchronisation émis par l'émetteur et identifiés par le récepteur. Pour surmonter les difficultés de synchronisation engendrées par les canaux de transmission, les signaux de synchronisation sont des séquences d'initialisation. La synchronisation du récepteur peut être obtenue en exploitant la répétition des signaux émis par l'émetteur.

Or il est nécessaire d'identifier avec précision le moment où le récepteur a reconnu la séquence d'initialisation, une mauvaise précision entraînant des défauts de synchronisation et/ou une complexité excessive du matériel de réception.

Le but de l'invention est donc de déterminer avec une grande précision ledit moment, même en présence de distorsions apportées par le canal ou en présence de bruit.

Ce but est atteint avec un système pour lequel, la séquence d'initialisation comprenant un préambule suivi d'une séquence de référence, les moyens de corrélation sont précédés par des moyens d'égalisation qui égalisent le signal reçu sur le préambule, les moyens de corrélation opérant la corrélation sur la séquence de référence.

Ainsi avantageusement, les moyens de corrélation peuvent opérer avec des signaux parfaitement égalisés sur le préambule de la séquence d'initialisation, ce qui permet de détecter avec une grande précision l'apparition de la séquence de référence.

Dans le cas d'un signal modulé à partir d'états d'une constellation, le préambule est formé d'une première suite d'états. Cette suite est préférentiellement répétitive pour réduire les moyens matériels et accélérer l'égalisation.

Pour accroître les performances de la corrélation, la séquence de référence comprend alors une première partie qui prolonge la suite d'états du préambule, cette première partie étant juxtaposée à une seconde partie formée d'une autre suite d'états. Ceci permet de détecter avec précision l'apparition de la transition située à la juxtaposition de la première partie et de la seconde partie de la séquence de référence et d'effectuer la synchronisation avec une grande précision même avec un faible rapport signal à bruit.

On notera que le document issu des « Proceedings ICASSP 90, International Conference on Acoustics, Speech, and Signal Processing », vol 1, 6 avril 1990, pages 1679-1682, de A.M. Gottlieb et ail, intitulé « The DSP implementation of a new timing recovery technique for high speed digital data transmission » traite d'un problème de récupération de porteuse pour récepteurs synchrones.

La demande de brevet internationale WO 80/01348 quant à elle propose d'utiliser un égaliseur adaptatif pour synchroniser un récepteur pour communications numériques sur un signal reçu.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : une représentation d'une constellation MAQ 4.
Figure 2 : un schéma d'un système de transmission selon l'invention.
Figure 3 : un schéma d'un égaliseur selon l'invention.
Figure 4 : un schéma des moyens de corrélation selon l'invention.
Figure 5 : un graphique montrant les variations du signal de sortie des moyens de corrélation.

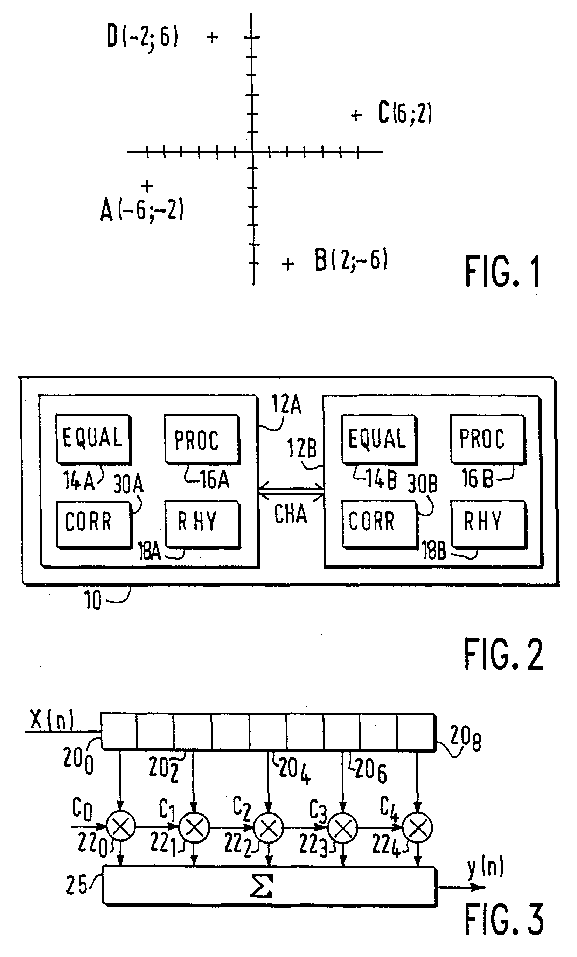

A titre d'exemple la description qui va suivre se rapporte à une modulation MAQ 4, représentée sur la figure 1, utilisée pour synchroniser un modem de transmission conforme aux normes de la série V définies par le Comité Consultatif International Télégraphique et Téléphonique (CCITT), normes publiées par l'Union Internationale des Télécommunications, Genève (1991). Néanmoins, l'invention peut être utilisée pour synchroniser d'autres systèmes, avec ou sans normes, utilisant d'autres séquences d'initialisation.

Considérons, à titre d'exemple, le cas où il existe un émetteur/récepteur à chaque extrémité du canal pour constituer une liaison bidirectionnelle.

La figure 2 représente un système 10 de transmission numérique, qui comprend un premier 12A émetteur/récepteur de signaux placé à une extrémité d'un canal CHA, et un second 12B émetteur/récepteur placé à l'autre extrémité. Les signaux à transmettre, par exemple pour des applications dans le domaine de la téléphonie, sont codés à l'aide de la constellation MAQ 4 représentée sur la figure 1. Il s'agit d'une constellation à quatre états : A(-6,-2) ; B (2,-6) ; C(6,2) ; D(-2,6).

Selon l'invention chaque émetteur/récepteur comprend des moyens de corrélation CORR, 30A, 30B, précédés de moyens d'égalisation EQUAL 14A, 14B qui corrigent les distorsions des signaux dues à leur transmission. Chaque émetteur/récepteur comprend également des moyens de traitement PROC 16A, 16B opérant sur les signaux égalisés et des moyens de cadencement RHY 18A, 18B qui fournissent les signaux de cadencement nécessaires au système de transmission. Les moyens d'égalisation 14A, 14B servent à la synchronisation. Les moyens de traitement disposent par ailleurs de leurs propres égaliseurs opérant sur les données contenant l'information à transmettre. Selon la norme précitée, la séquence d'initialisation est formée d'une première suite répétant des signaux modulés par les états A et B de la constellation selon la suite ABABAB... se déroulant sur 256 périodes d'horloge-symbole de durée élémentaire T. A l'issue des 256 périodes, la première suite est remplacée par la seconde suite répétant des signaux modulés par les états C et D de la constellation selon la suite CDCDCD... se déroulant sur 16 périodes d'horloge-symbole.

La synchronisation du premier et du second émetteur/récepteur l'un sur l'autre va consister à détecter le moment d'apparition de la transition entre la suite d'états AB et la suite d'états CD et à synchroniser les moyens de cadencement.

L'égalisation selon l'invention est effectuée sur, par exemple, 200 symboles de la suite ABABAB... Ces 200 symboles constituent le préambule au sens de l'invention. A la fin de ce préambule, l'égalisation sur le préambule est arrêtée et la corrélation peut être effectuée sur les symboles AB restants et sur les symboles CD. La séquence de référence va alors comprendre les symboles placés de part et d'autre de la transition, c'est-à-dire des symboles AB et des symboles CD. Avec une suite déterministe ABABAB... l'égalisation tend à calculer des coefficients d'égalisation propres à cette suite déterministe. Elle n'est pas nécessairement adaptée aux symboles CD. Néanmoins, cette égalisation sur les symboles AB est déterminante pour renforcer le pic de corrélation qui apparaît à l'instant de la transition.

Ainsi, lorsque la séquence suivante CDCD... se présente les moyens de corrélation CORR, 30A, 30B peuvent détecter avec précision le moment d'apparition de la transition entre les états A, B et les états C, D de la séquence d'initialisation.

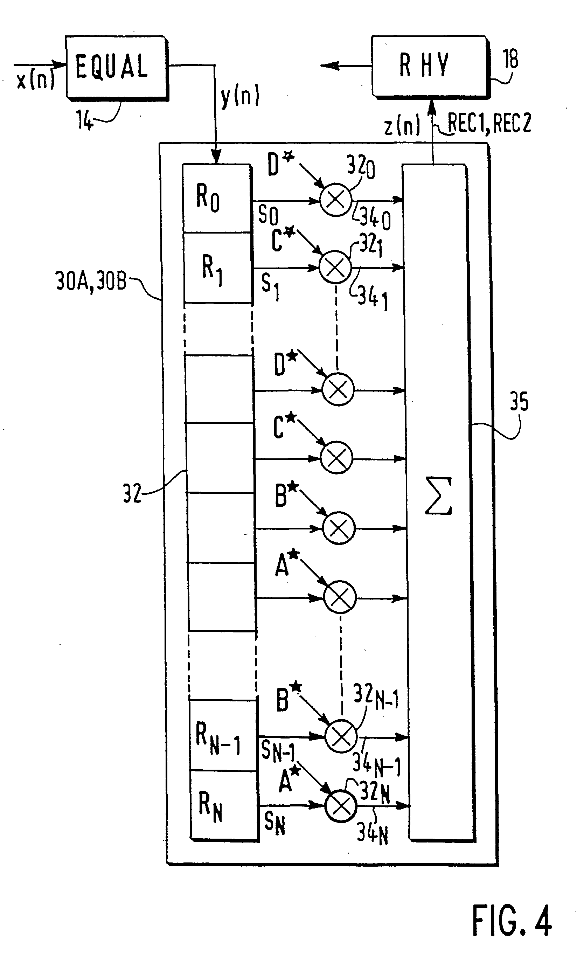

La figure 3 représente un exemple préférentiel de réalisation d'un égaliseur selon l'invention. Il comprend un registre à décalage formé de cellules $20_0$ à $20_8$, le décalage étant effectué à une cadence T/3, c'est-à-dire trois fois plus élevée que celle de l'horloge-symbole T des signaux d'entrée x(n). La sortie d'une cellule sur deux c'est-à-dire les cellules $20_0$, $20_2$, $20_4$, $20_6$, $20_8$ entre dans un multiplieur $22_0$ à $22_4$ qui reçoit aussi un coefficient de pondération C0, C1, C2, C3, C4. Les sorties des cinq multiplieurs sont additionnées dans un sommateur $\Sigma$ 25 qui délivre le signal égalisé y(n) qui entre dans les moyens de corrélation représentés sur la figure 4.

Le signal y(n) entre en continu dans un registre à décalage 32 formé de cellules élémentaires $R_0$, $R_1$,...$R_{N-1}$, $R_N$, où N+1 est la longueur de la séquence de référence. Les sorties de chaque cellule $S_0$, $S_1$,...$S_{N-1}$, $S_N$ entrent dans des moyens de multiplication $32_0$, $32_1$,...$32_{N-1}$, $32_N$ qui reçoivent respectivement sur une entrée une sortie $S_0$, $S_1$... ou $S_N$ et sur une autre entrée un état conjugué de la constellation formant la séquence de référence. La répartition de la séquence de référence est faite de telle manière que le moyen de multiplication $32_0$ reçoit le conjugué du dernier état de la séquence de référence, que le moyen de multiplication $32_N$ reçoit le conjugué du premier état de la séquence de référence et que, les moyens de multiplication intermédiaires reçoivent chacun, dans l'ordre, un conjugué des états intermédiaires de la séquence de référence. Toutes les sorties $34_0$, $34_1$,...,$34_{N-1}$, $34_N$ des moyens de multiplication sont cumulées dans un sommateur 35 qui délivre un signal de sortie z(n) selon l'équation :

$$z(n) = \sum_{i=0}^{i=N} y(n-i) \cdot r^*(i)$$

La séquence de référence peut par exemple être la séquence :

$$r^* (i) = A^* \, B^* \, A^* \, B^* \, A^* \, B^* \, A^* \, B^* \, C^* \, D^* \, C^* \, D^* \, C^* \, D^* \, C^* \, D^*$$

qui comprend 16 états conjugués formés de deux groupes égaux de 8 états conjugués répartis de part et d'autre de la transition.

La séquence de référence peut être courte pour limiter les moyens matériels nécessaires à la mise en oeuvre de la corrélation.

Lorsque la succession de séquences incidentes circule dans les cellules $R_0...R_N$, il se produit un moment où le résultat de la multiplication de la séquence se trouvant, à cet instant, dans les cellules $R_0...R_N$ par la séquence de référence décrite précédemment fournit un signal de sortie z(n) maximal. L'instant de la transition peut ainsi être déterminé avec une grande précision.

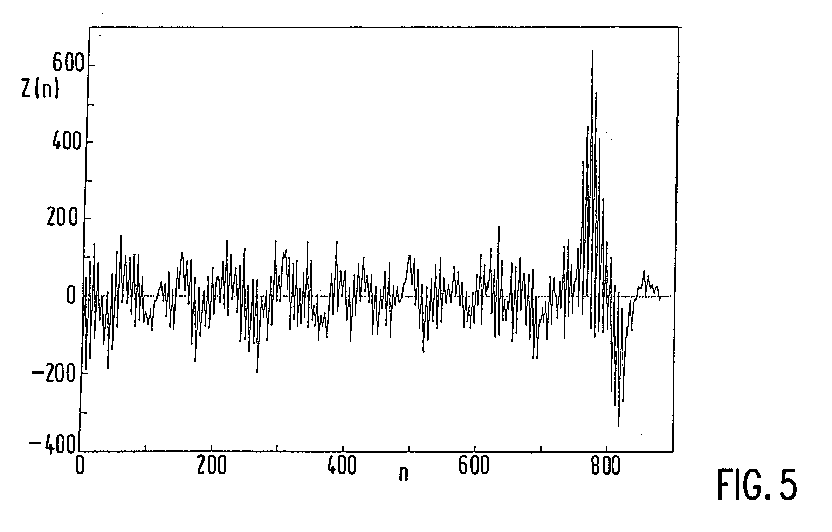

La figure 5 est un graphique représentant les variations du signal de sortie z(n) dans le cas d'un rapport signal à bruit de 6 décibels. Ce signal reste erratique (représentant du bruit) jusqu'au moment où la transition entre les états A B et les états C D se trouve correctement située dans les cellules $R_0...R_N$. Le signal de sortie z(n) présente alors un pic qui est utilisé par les moyens de cadencement 18 comme signal de reconnaissance REC1, REC2 pour déclencher respectivement la synchronisation des deux émetteurs/récepteurs.

On observe que le signal z(n) est une suite discrète de valeurs de corrélation. Aux environs du maximum de corrélation, les moyens de cadencement 18A, 18B vont identifier la position exacte du pic central qui correspond à la corrélation maximale. Pour cela on compare entre elles, deux à deux, des valeurs consécutives ...z(n+k-1), z(n+k), z (n+k+1)... où n est un indice courant. La valeur maximale de z permet de déterminer l'échantillon, par exemple l'échantillon (n+k) où apparaît le maximum. Connaissant la composition de la séquence d'initialisation, la position approximative k du maximum de z est connue à l'avance ce qui permet d'arrêter le déroulement de la corrélation lorsque la transition est passée avec certitude (délai td). En retardant les données à traiter de manière correspondante (délai égal à td), dans les moyens de traitement 16A; 16B, il est ainsi possible de synchroniser les moyens de cadencement et les moyens de traitement sur l'instant de la transition.

Le maximum de corrélation est particulièrement étroit ce qui permet de le situer à $\pm$ 1 échantillon, ce qui simplifie considérablement la complexité matérielle du système. Néanmoins, compte tenu du bruit, le pic central peut avoir un bruit additif plus élevé qu'un pic latéral qui, lui, peut être le vrai maximum. Pour cela, il est possible d'utiliser, dans les moyens de traitement, plusieurs égaliseurs de traitement calés respectivement sur le pic central et sur plusieurs pics latéraux. Avec une précision de $\pm$ 1 échantillon, l'invention permet de réduire de beaucoup cette multiplicité d'égaliseurs de traitement en aval.

L'invention a été décrite avec des moyens opérant la corrélation en effectuant des multiplications des séquences incidentes par une séquence de référence formée d'états conjugués à l'aide de multiplieurs. Il est néanmoins possible d'opérer différemment les mesures de corrélation, par exemple à l'aide d'un processeur de signaux numériques programmé pour effectuer la corrélation.

**Revendications**

**1.** Système (10) de transmission numérique comprenant au moins un émetteur (12A) et au moins un récepteur (12B), l'émetteur comportant des moyens pour émettre un signal comportant une séquence d'initialisation, et le récepteur comportant des moyens de corrélation (30B) pour effectuer une reconnaissance de la séquence d'initialisation afin de synchroniser le récepteur avec l'émetteur **caractérisé en ce que**, ladite séquence d'initialisation comprenant un préambule suivi d'une séquence de référence, ledit récepteur comprend en outre des moyens d'égalisation (14B) précédant les môyens de corrélation et adaptés pour égaliser le signal reçu sur le préambule, lesdits moyens de corrélation étant adaptés pour opérer la corrélation sur la séquence de référence.

**2.** Système selon la revendication 1 **caractérisé en ce que** le signal est modulé à partir d'états d'une constellation, le préambule étant formé d'une première suite d'états, et la séquence de référence comprenant une première partie, formée par une continuation de la première suite d'états, juxtaposée à une seconde partie formée d'une seconde suite d'états.

**3.** Système selon la revendication 2 **caractérisé en ce que** la première suite et la seconde suite sont des suites répétitives.

**4.** Système selon la revendication 2 ou 3 **caractérisé en ce que** la corrélation sur la séquence de référence est opérée à partir d'une séquence formée d'états conjugués d'états de la séquence d'initialisation.

**5.** Récepteur comportant des moyens de corrélation (30B) pour effectuer une reconnaissance d'une séquence d'initialisation d'un signal transmis par un émetteur afin de se synchroniser avec ledit émetteur **caractérisé en ce que**, ladite séquence d'initialisation comprenant un préambule suivi d'une séquence de référence, ledit récepteur comprend en outre des moyens d'égalisation (14B) précédant les moyens de corrélation et adaptés pour égaliser le signal reçu sur le préambule, lesdits moyens de corrélation étant adaptés pour opérer la corrélation sur la séquence de référence.

**6.** Récepteur selon la revendication 5 **caractérisé en ce que** le signal est modulé à partir d'états d'une constellation, le préambule étant formé d'une première suite d'états, et la séquence de référence comprenant une première partie, formée par une continuation de la première suite d'états, juxtaposée à une seconde partie formée d'une seconde suite d'états.

**7.** Récepteur selon la revendication 6 **caractérisé en ce que** la première suite et la seconde suite sont des suites répétitives.

**8.** Récepteur selon la revendication 6 ou 7 **caractérisé en ce que** la corrélation sur la séquence de référence est opérée à partir d'une séquence formée d'états conjugués d'états de la séquence d'initialisation.

**9.** Procédé de synchronisation d'un récepteur sur un émetteur, ledit procédé comportant une étape d'émission par ledit émetteur d'un signal comportant une séquence d'initialisation, et une étape de corrélation pour effectuer une reconnaissance de la séquence d'initialisation, au niveau du récepteur, afin de synchroniser le récepteur avec l'émetteur, **caractérisé en ce que**, ladite séquence d'initialisation comprenant un préambule suivi d'une séquence de référence, ledit procédé comprend en outre une étape d'égalisation, précédant ladite étape de corrélation, pour égaliser le signal reçu sur le préambule, ladite étape de corrélation opérant la corrélation sur la séquence de référence.

**Claims**

**1.** A digital transmission system (10) comprising at least a transmitter (12A) and at least a receiver (12B), the transmitter comprising means for transmitting a signal which includes an initialization sequence and the receiver comprising correlation means (30B) for effecting a recognition of the initialization sequence for the synchronization of the receiver with the transmitter, **characterized in that** while said initialization sequence comprises a preamble followed by a reference sequence, said receiver further includes equalization means (14B) preceding the correlation means and the equalization means being adapted for equalizing the received signal with the preamble, said correlation means being adapted for effecting the correlation with the reference sequence.

**2.** A system as claimed in Claim 1, **characterized in that** the signal is modulated based upon states of a constellation, while the preamble is formed by a first state series and the reference sequence comprises a first part formed by a continuation of the first state series, juxtaposed with a second part formed by a second state series.

**3.** A system as claimed in Claim 2, **characterized in that** the first series and the second series are repetitive series.

**4.** A system as claimed in Claim 2 or 3, **characterized in that** the correlation with the reference sequence is effected based on a sequence of conjugate states of initialization sequence states.

**5.** A receiver comprising correlation means (30B) for effecting a recognition of an initialization sequence of a signal transmitted by a transmitter for the synchronization of the receiver with said transmitter, **characterized in that** while said initialization sequence comprises a preamble followed by a reference sequence, said receiver further includes equalization means (14B) preceding the correlation means and the equalization means being adapted for equalizing the received signal with the preamble, said correlation means being adapted for effecting the correlation with the reference sequence.

**6.** A receiver as claimed in claim 5, **characterized in that** the signal is modulated based on states of a constellation, while the preamble is formed by a first state series and the reference sequence comprises a first part formed by a continuation of the first state series, juxtaposed with a second part formed by a second state series.

**7.** A receiver as claimed in claim 6, **characterized in that** the first series and the second series are repetitive series.

8. A receiver as claimed in claim 6 or 7, **characterized in that** the correlation with the reference sequence is effected based on a sequence formed by conjugated states of the initialization sequence.

9. A method of synchronizing a receiver with a transmitter, said method comprising a transmission step by said transmitter of a signal which comprises an initialization sequence, and a correlation step of effecting a recognition of the initialization sequence at the level of the receiver for synchronizing the receiver with the transmitter, **characterized in that**, while said initialization sequence comprises a preamble followed by a reference sequence, said receiver further includes an equalization step preceding the correlation step for equalizing the received signal with the preamble, said correlation step effecting the correlation with the reference sequence.

**Patentansprüche**

1. Digitales Übertragungssystem (10) mit mindestens einem Sender (12A) und mindestens einem Empfänger (12B), wobei der Sender Verfahren aufweist, um ein Signal mit einer Initialisierungsfolge zu übertragen, und der Empfänger Korrelationsverfahren (30B) aufweist, um eine Erkennung der Initialisierungsfolge vorzunehmen, um den Empfänger mit dem Sender zu synchronisieren, **dadurch gekennzeichnet, daß** die besagte Initialisierungsfolge ein Vorwort enthält, gefolgt von einer Bezugsfolge, der besagte Empfänger zudem Entzerrungsverfahren (14B) aufweist, die den Korrelationsverfahren vorausgehen und geeignet sind, um das Signal, das über das Vorwort empfangen wurde, zu entzerren, wobei die besagten Korrelationsverfahren geeignet sind, um die Korrelation über die Bezugsfolge vorzunehmen.

2. System nach Anspruch 1, **dadurch gekennzeichnet, daß** das Signal anhand der Zustände einer Konstellation moduliert wird, wobei das Vorwort aus einer ersten Zustandsfolge gebildet wird, und die Bezugsfolge einen ersten Teil enthält, aus der Fortsetzung der ersten Zustandsfolge gebildet, neben einem zweiten Teil stehend, aus einer zweiten Zustandsfolge gebildet.

3. System nach Anspruch 2, **dadurch gekennzeichnet, daß** die erste Folge und die zweite Folge Wiederholungsfolgen sind.

4. System nach Anspruch 2 oder 3, **dadurch gekennzeichnet, daß** die Korrelation über die Bezugsfolge anhand einer Folge vorgenommen wird, die aus zugeordneten Zuständen der Zustände der Initialisierungsfolge gebildet werden.

5. Empfänger mit Korrelationsverfahren (30B), um eine Erkennung einer Initialisierungsfolge eines Signals vorzunehmen, das von einem Sender übertragen wurde, um mit dem besagten Sender synchronisiert zu werden, **dadurch gekennzeichnet, daß** die besagte Initialisierungsfolge ein Vorwort enthält, gefolgt von einer Bezugsfolge, der besagte Empfänger zudem Entzerrungsverfahren (14B) aufweist, die den Korrelationsverfahren vorausgehen und geeignet sind, um das Signal, das über das Vorwort empfangen wurde, zu entzerren, wobei die besagten Korrelationsverfahren geeignet sind, um die Korrelation über die Bezugsfolge vorzunehmen.

6. Empfänger nach Anspruch 5, **dadurch gekennzeichnet, daß** das Signal anhand der Zustände einer Konstellation moduliert wird, wobei das Vorwort aus einer ersten Zustandsfolge gebildet wird, und die Bezugsfolge einen ersten Teil enthält, aus der Fortsetzung der ersten Zustandsfolge gebildet, neben einem zweiten Teil stehend, aus einer zweiten Zustandsfolge gebildet.

7. Empfänger nach Anspruch 6, **dadurch gekennzeichnet, daß** die erste Folge und die zweite Folge Wiederholungsfolgen sind.

8. Empfänger nach Anspruch 6 oder 7, **dadurch gekennzeichnet, daß** die Korrelation über die Bezugsfolge anhand einer Folge vorgenommen wird, die aus zugeordneten Zuständen der Zustände der Initialisierungsfolge gebildet werden.

9. Synchronisationsverfahren eines Empfängers auf einen Sender, wobei das besagte Verfahren einen Übertragungsschritt durch den besagten Sender eines Signals mit einer Initialisierungsfolge enthält, und einen Korrelationsschritt, um auf der Höhe des Empfängers eine Erkennung der Initialisierungsfolge vorzunehmen, um den Empfänger mit dem Sender zu synchronisieren, **dadurch gekennzeichnet, daß** die besagte Initialisierungsfolge ein Vorwort enthält, gefolgt von einer Bezugsfolge, das besagte Verfahren zudem einen Entzerrungsschritt aufweist, der dem Korrelationsschritt vorausgeht, um das Signal, das über das Vorwort empfangen wurde, zu entzerren, wobei der besagte Korrelationsschritt die Korrelation über die Bezugsfolge vornimmt.

D(-2; 6)    +

+ C(6;2)

A(-6;-2)  +

+ B(2;-6)

**FIG. 1**

12A

12B

EQUAL          PROC

14A   30A      16A

CORR           RHY

18A

CHA

EQUAL          PROC

14B   30B      16B

CORR           RHY

18B

10

**FIG. 2**

$X(n)$

$20_0$   $20_2$   $20_4$   $20_6$   $20_8$

$C_0$      $C_1$      $C_2$      $C_3$      $C_4$

$22_0$   $22_1$   $22_2$   $22_3$   $22_4$

25         $\Sigma$          $y(n)$

**FIG. 3**

FIG. 4

FIG. 5